Europäisches Patentamt

(19) European Patent Office

Office européen des brevets

(11) Publication number : **0 415 588 B1**

(12) **EUROPEAN PATENT SPECIFICATION**

(45) Date of publication of patent specification :
**19.01.94 Bulletin 94/03**

(51) Int. Cl.[5] : **C08F 210/06,** C08F 210/16, C08F 4/653, C08F 2/34

(21) Application number : **90308836.7**

(22) Date of filing : **10.08.90**

(54) **Process for preparing in gas phase elastomeric copolymers of propylene.**

(30) Priority : **29.08.89 FR 8911523**

(43) Date of publication of application :
**06.03.91 Bulletin 91/10**

(45) Publication of the grant of the patent :
**19.01.94 Bulletin 94/03**

(84) Designated Contracting States :
**AT BE CH DE DK ES GB GR IT LI LU NL SE**

(56) References cited :
**EP-A- 0 099 773**
**EP-A- 0 338 676**
**US-A- 4 384 984**

(73) Proprietor : **BP Chemicals Limited**
**Britannic House 1 Finsbury Circus**
**London EC2M 7BA (GB)**

(72) Inventor : **Bailly, Jean-Claude Andre, BP**
**Chemicals SNC**
**Centre de Recherches, Serivce Properiete**
**Ind.**
**BP No. 6, F-13117 Lavera (FR)**
Inventor : **Bordere, Louis, BP Chemicals SNC**
**Centre de Recherches, Serivce Properiete**
**Ind.**
**BP No. 6, F-13117 Lavera (FR)**

(74) Representative : **Denbigh, Keith Warwick et al**
**BP INTERNATIONAL LIMITED Patents &**
**Agreements Division Chertsey Road**
**Sunbury-on-Thames Middlesex, TW16 7LN**
**(GB)**

## Description

The present invention relates to a process for gas phase manufacture of copolymers of propylene, ethylene and/or 1-butene and optionally of one or more alpha-olefins containing from 5 to 12 carbon atoms. The process uses a highly active and stereospecific catalyst system in the copolymerization of propylene.

It is known that catalyst systems of Ziegler-Natta type consist of the combination of a catalyst containing at least one compound of a transition metal such as titanium, and of a cocatalyst containing at least one organometallic compound of a metal such as aluminium. It is known, furthermore, that the properties of these catalysts can be greatly influenced when the transition metal compound is deposited on a support consisting of a solid inorganic compound such as a magnesium chloride. In the technique for the preparation of a supported catalyst the properties of the support and the process for preparing the catalyst, which generally consists in fixing the transition metal compound onto the said support, are of very great importance for the characteristics of the catalyst.

According to French Patent No.2,529,209 there is a known process for gas phase manufacture of propylene polymer or copolymer with the aid of a catalyst supported by spherical particles consisting of a magnesium chloride containing an organic electron-donor compound, such as an ether. The preparation of the catalyst consists in treating the support with the aid of an aromatic carboxylic acid ester, and in then impregnating the said support with titanium tetrachloride. Before its use in the gas phase polymerization or copolymerization reaction, this catalyst may be subjected to a prepolymerization stage consisting in polymerizing a small quantity of propylene in the presence of a cocatalyst, generally a trialkylaluminium employed under the form of a complex with an external electron-donor compound chosen from aromatic carboxylic acid esters, such as ethyl benzoate. However, a disadvantage appears in this process since, in the course of time, the prepolymer rapidly loses a part of its catalytic activity and becomes unusable after a few days' storage at ambient temperature. Furthermore, the polymers or copolymers prepared with the aid of this prepolymer have a strong odour linked with the presence of large quantities of aromatic carboxylic acid ester. In addition, the polymers or copolymers obtained in gaseous phase have a relatively high residual titanium content, generally equal to or greater than 10 parts per million by weight (ppm).

A process for gas phase copolymerization of propylene has now been found, comprising a prepolymerization stage which uses a catalyst system which has a very high activity and a very high stereospecificity in the polymerization of propylene at the same time and which is capable of avoiding the disadvantages referred to above. In particular, the prepolymer obtained according to the present invention can be stored for many days and even for many months at a temperature which may vary over a wide range, without any notable weakening of its polymerization activity being observable. Furthermore, the copolymers prepared according to the process of the invention no longer exhibit a strong odour.

The subject of the present invention is therefore a process for gas phase manufacture of copolymers containing, by weight, from 20% to 80% of propylene and from 80% to 20% of ethylene and/or of 1-butene and optionally of one or more alpha-olefins containing from 5 to 12 carbon atoms, a process characterized in that

1) a catalyst of Ziegler-Natta type is used, obtained by bringing a magnesium chloride support into contact with an internal electron-donor compound $D_3$ chosen from aromatic carboxylic acid esters, and then with titanium tetrachloride, the said support being initially preactivated with an organic compound D1 different from $D_3$ and free from labile hydrogen, the said support consisting of 80 to 99.5 mol% of magnesium dichloride and from 0.5 to 20 mol% of $D_1$, and being in the form of spherical particles in which the ratio of the large axis to small axis is lower than 1.5 and which have a mass-mean diameter Dm of 5 to 100 microns and a particle size distribution such that the ratio of the mass-mean diameter, $D_m$, to the number-mean diameter, Dn, is lower than 2, and

2) that the process comprises in a first stage a pre-polymerization performed by bringing propylene optionally mixed with ethylene and/or an alpha-olefin containing from 4 to 12 carbon atoms into contact with a catalyst system comprising the said catalyst and a cocatalyst (A) consisting of a trialkylaluminium and/or of an alkylaluminium halide not complexed with an external electron-donor compound, and in a second stage a gas phase copolymerization reaction carried out by bringing the prepolymer prepared previously into contact with a mixture comprising propylene, ethylene and/or 1-butene and optionally an alpha-olefin containing from 5 to 12 carbon atoms in a proportion such that the propylene represents from 20% to 80% by volume of the olefins to be copolymerized.

According to the present invention the catalyst used must comprise a particular support based on magnesium dichloride which makes it possible to manufacture a catalyst having a relatively high titanium content and an extremely high activity in the copolymerization of propylene. This particular support is said to be preactivated by an organic electron-donor compound, $D_1$, which is present in the magnesium dichloride in a relatively large quantity. The organic electron-donor compound, $D_1$, is known as such or as a Lewis base, which may have particularly a relatively low complexing power in respect of magnesium dichloride. The compound $D_1$ is advantageously chosen from mild complexing agents such as ethers, thioethers, amines, amides, sulphones, sulphoxides and phosphines It cannot be chosen from agents capable of reacting with one of the products employed to prepare the support or the catalyst. In particular, the compound $D_1$ cannot be chosen from electron-donor compounds containing labile hydrogen, such as water, alcohols or phenols, or from aromatic carboxylic acid esters. The organic electron-donor compound, $D_1$, is preferably an ether.

The preactivated support is characterized by the fact that it contains a relatively large quantity of the organic electron-donor compound, $D_1$. The composition of the preactivated support comprises from 80 to 99.5 mol% of magnesium dichloride and from 0.5 to 20 mol% of the compound D1. However, in order to obtain a catalyst of high activity and exhibiting a high titanium content, it advantageously comprises from 80 to 95 mol% of magnesium dichloride and from 5 to 20 mol% of the compound $D_1$, and preferably from 80 to 90 mol% of magnesium dichloride and from 10 to 20 mol% of the compound $D_1$. It has been found that the catalysts have the highest activity when the preactivated support is in the form of a homogeneous composition comprising magnesium dichloride and the compound $D_1$, that is to say a composition where the compound $D_1$ is distributed uniformly throughout the magnesium dichloride particle, in particular from the core to the periphery of the latter. From this it follows that, to obtain such a preactivated support, it is recommended to prepare it according to methods employing precipitation reactions and not merely bringing into contact, such as those performed by milling.

It has been found, furthermore, that the preactivated support yields highly effective catalysts with a high titanium content, capable in particular of withstanding the enormous growth stresses during the copolymerization, when it exhibits an essentially amorphous structure, that is to say a structure where the crystallinity forms of magnesium dichloride which are determined with the aid of an x-ray diffraction analysis have disappeared completely or to a large extent.

The preactivated support is additionally characterized by the fact that it consists of spherical particles which have a mass mean diameter of 5 to 100 microns, preferably of 20 to 50 microns. A spherical particle means a spheroidal particle in which the ratio of the large axis to small axis is lower than 1.5, preferably equal to or lower than 1.3. The particles have a very narrow particle size distribution, such that the ratio Dm/Dn of the mass-mean diameter, Dm, to the number-man diameter, Dn, is lower than 2. More particularly, the particle size distribution of these particles may be extremely narrow, such that the ratio Dm/Dn is from 1.1 to 1.5; a virtually complete absence of particles with a diameter higher than 1.5 x Dm or lower than 0.6 x Dm may be observed; the particle size distribution can also be appreciated by the fact that more than 90% by weight of the particles in the same single batch are within the range Dm ± 10%.

The specific surface of the preactivated support particles may be 20 to 100 $m^2/g$ (BET), preferably from 30 to 60 $m^2/g$ (BET) and the relative density of these particles can range approximately from 1.2 to 2.1.

The preactivated support employed in the present invention can, in particular, be prepared by reacting a dialkylmagnesium compound with chlorinated organic compound in the presence of the organic electron-donor compound, $D_1$. The dialkylmagnesium compound may be a product of formula $R_1 Mg R_2$ in which $R_1$ and $R_2$ are identical or different alkyl radicals containing from 2 to 12 carbon atoms. One of the important properties of the dialkylmagnesium compound is that of being soluble as such in the hydrocarbon medium in which the preparation of the support will be performed. The chlorinated organic compound may be an alkyl chloride of formula $R_3Cl$ in which $R_3$ is a secondary or, preferably, tertiary alkyl radical containing from 3 to 12 carbon atoms. The organic electron-donor compound, $D_1$, is preferably an ether of formula $R_4OR_5$ in which $R_4$ and $R_5$ are identical or different alkyl radicals containing from 1 to 12 carbon atoms.

In addition, the various reactants involved in the preparation of the preactivated support may be employed in the following conditions:
- the molar ratio $R_3Cl/R_1MgR_2$ is from 1.5 to 2.5, preferably from 1.95 to 2.2,
- the molar ratio $D_1/R_1MgR_2$ is from 0.1 to 1.2, preferably from 0.3 to 0.8.

The reaction between $R_1MgR_2$ and $R_3Cl$ in the presence of the organic electron-donor compound, $D_1$, is a precipitation which takes place with stirring, within a liquid hydrocarbon. The specialist knows that, in this case, the physical factors such as the viscosity of the medium, the method and the rate of stirring and the conditions of use of the reactants can, everything else being equal, play a major part in the form, the structure, the size and the particle size distribution of the precipitated particles. However, to obtain the preactivated support employed in the present invention and characterized, in particular, by an essentially amorphous structure, it is recommended to carry out the precipitation reaction at a relatively low temperature, ranging from 10 to 80°C, preferbly from 10 to 50°C, and more particularly from 15 to 35°C. It is recommended, furthermore, that the precipitation reaction should take place extremely slowly, over a period of at least 2 hours, preferably a period ranging from 10 to 24 hours, so as to permit a suitable organization of the solid product formed, in particular the insertion of a large quantity of the compound $D_1$ and

its uniform dispersion in the precipitated solid.

The preparation of the catalyst according to the present invention normally comprises at least the two successive stages which consist:

(a) in treating the preactivated support with the aid of at least one internal electron-donor compound $D_3$, chosen from aromatic carboxylic acid esters, and then

(b) in impregnating the support thus obtained with titanium tetrachloride in a molar quantity in excess relative to the magnesium dichloride, and in then removing the excess unimpregnated titanium tetrachloride by at least one washing with the aid of a liquid hydrocarbon.

More particularly, in stage (a), the aromatic carboxylic acid ester is advantageously chosen from ethyl benzoate, methyl para-toluate and dibutyl or diisobutyl phthalate. The treatment with the aromatic carboxylic acid ester is carried out in such conditions that the structure and the morphology of the support should not be appreciably modified. It may be carried out, in particular, by bringing the support into contact with the aromatic carboxylic acid ester in a quantity of between 0.1 and 1 mole, preferably of between 0.2 and 0.8 moles per mole of magnesium dichloride. It is generally recommended to perform this bringing into contact at a temperature of 10 to 60°C, preferably of 20 to 50°C, in order not to appreciably modify the morphology of the support. It is advantageous to perform this bringing into contact with stirring within a liquid hydrocarbon such as n-hexane. In practice, the bringing into contact can be performed in various possible ways, in particular by adding the aromatic carboxylic acid ester to a suspension of the support kept stirred in a liquid hydrocarbon. The support thus treated may be washed one or more times with a liquid hydrocarbon such as n-hexane, before proceeding to the next stage.

In stage (b), the support treated with the aromatic carboxylic acid ester is impregnated with titanium tetrachloride, which may be employed pure or in solution in a liquid hydrocarbon such as n-hexane. This impregnation may be carried out by bringing the support into contact with titanium tetrachloride in a quantity of between 2 and 20 moles, preferably of between 5 and 15 moles per mole of magnesium dichloride. In addition, it is recommended that the impregnation be carried out at a temperature ranging from 20 to 120°C, and preferably from 70 to 100°C, in order that the support should retain a relatively amorphous structure which allows it to withstand suitably the high growth stresses during the subsequent stages of prepolymerization and of copolymerization in gaseous phase. It is advantageous, moreover, to perform this impregnation with stirring and within a liquid hydrocarbon such as n-hexane. In practice, the impregnation may be performed in various ways, in particular by adding titanium tetrachloride to a suspension of the support kept stirred in a liquid hydrocarbon. The support impregnated in this way is advantageously washed one or more times with the aid of a liquid hydrocarbon such as n-hexane, in order to remove the excess of unimpregnated titanium tetrachloride from the support.

A preferred process for the preparation of the catalyst may comprise the four successive stages which consist:

(m) in treating the preactivated support with at least one electron-donor compound containing labile hydrogen, $D_2$,

(n) in treating the support obtained previously with at least one internal electron-donor compound $D_3$ chosen from the aromatic carboxylic acid esters,

(p) in impregnating the support treated in this way with titanium tetrachloride in a molar quantity in excess relative to the magnesium dichloride, and then removing the excess of unimpregnated titanium tetrachloride by at least one washing with the aid of a liquid hydrocarbon, and

(q) in subjecting the support impregnated in this way to a treatment of activation with titanium tetrachloride, and in then washing the support treated in this way with the aid of a liquid hydrocarbon.

More particularly, in stage (m), the treatment of the preactivated support is carried out with the aid of an electron-donor compound containing labile hydrogen, $D_2$, in order to obtain a support capable of subsequently fixing a large quantity of titanium tetrachloride. In reality, this treatment consists in performing within the preactivated support an exchange between the organic electron-donor compound, $D_1$, and the electron-donor compound containing labile hydrogen, $D_2$, in such conditions as to make this exchange practically complete without, however, appreciably modifying the structure of the support. In particular, the compound $D_2$ may exhibit a complexing power in respect of magnesium dichloride which is higher than that of the compound $D_1$.

The electron-donor compound containing labile hydrogen, $D_2$, is advantageously chosen from water, alcohols and phenols. An alcohol containing from 1 to 12 carbon atoms is preferably employed. More particularly, the compound $D_2$ may be chosen from ethanol, propanol, n-butanol, n-pentanol and n-hexanol.

This treatment is advantageously carried out without it being possible to observe a manifest crystallization of the support or any disintegration of the particles. In particular, it may be carried out by bringing the support into contact with the compound $D_2$, employed in a quantity of between 0.2 and 1.2 moles, preferably of between 0.5 and 1.0 mole per mole of magnesium dichloride. In addition, it is particularly recommended that the bringing into contact be carried out at a temperature of 0°C to 50°C, preferably of 10°C to 35°C, in order that the exchange may take place without appreciable modification of the initial preactivated support. Furthermore, it is advantageous to perform this bringing into contact with stirring within a liquid hydrocarbon such as n-hexane. In practice, this bringing into contact may be performed in various possible ways, for example by adding the compound $D_2$ to a suspension of preactivated support kept stirred in a liquid hydrocarbon. It is generally observed that all the compound $D_2$ used in this treatment is fixed in the support and no appreciable change in the amorphous structure and in the morphology of the support is revealed. The support treated in this way with the compound $D_2$ may be washed one or more times with the aid of a liquid hydrocarbon such as n-hexane before proceeding to the next stage.

Stage (n) is identical with stage (a) described above, except for the fact that instead of employing the preactivated support, the support prepared in stage (m) is employed.

Stage (p) is also identical with stage (b) described above, except for the fact that instead of employing the support prepared in stage (a), the support prepared in stage (n) is employed.

In stage (q) the support prepared in stage (p) is subjected to an activation treatment with titanium tetrachloride. This treatment may consist in bringing the solid impregnated with titanium into contact with titanium tetrachloride, employed pure or in solution in a liquid hydrocarbon such as n-hexane. The quantity of titanium tetrachloride which is used is from 2 to 20 moles, preferably from 5 to 15 moles per mole of magnesium dichloride. It is recommended, in addition, to perform the bringing into contact at a temperature ranging from 20 to 120°C, and preferably from 70 to 120°C. It is advantageous to carry out the activation stage thereof with stirring, within a liquid hydrocarbon such as n-hexane. In practice, the bringing into contact may be performed in various ways, in particular by adding titanium tetrachloride to a suspension of the solid impregnated with titanium in a liquid hydrocarbon and by keeping the mixture obtained in this way stirred for a period ranging from 0.5 to 10 hours, preferably from 1 to 4 hours. The solid treated in this way is advantageously washed one or more times with the aid of a liquid hydrocarbon such as n-hexane. The activation treatment may consist of one or more operations of bringing into contact of this type. The support treated in this way may contain from 4 to 10 mol% of titanium per mole of magnesium.

The process for preparing the catalyst in four stages gives a catalyst which has an extremely high activity in propylene copolymerization. In addition, the catalyst obtained by either of these methods exhibits a morphology, a size and a particle size distribution which are substantially identical with those of the preactivated support employed.

The catalyst prepared in this way is employed with a cocatalyst (A) consisting of a trialkylaluminium and/or of an alkylaluminium halide not complexed with an external electron-donor compound to produce the catalyst system employed in the prepolymerization stage of the process of the invention. It has been found, in fact, that the catalyst is capable of being employed in the absence of any external electron-donor compound and that a catalyst system which is highly active and stereospecific in propylene polymerization is nevertheless and very surprisingly obtained. Thus, during the prepolymerization, propylene, optionally mixed with ethylene and/or an alpha-olefin containing from 4 to 12 carbon atoms, is brought into contact solely with the catalyst and the cocatalyst (A). More particularly, the cocatalyst (A) must be employed in a form which is not complexed by an electron-donor compound.

The cocatalyst (A) is a trialkylaluminium, an alkylaluminium halide or a mixture of both. The trialkylaluminium may consist of one or more compounds of general formula $AlR_3$ in which R is an alkyl radical containing from 1 to 8 carbon atoms. It is advantageously chosen from triethylaluminium, triisobutylaluminium, tri-n-hexylaluminium and tri-n-octylaluminium. The alkylaluminium halide advantageously corresponds to the general formula $AlX_nR_{3-n}$ in which X is a chlorine or bromine atom, R is an alkyl radical containing from 1 to 8 carbon atoms and n an integral or fractional number equal to or higher than 0.5 and lower than 3, preferably equal to or higher than 1 and lower than or equal to 2. The alkylaluminium halide may consist of one or more organoaluminium compounds whose general formula corresponds to that mentioned above. It is advantageously chosen from diethylaluminium monochloride, ethylaluminium sesquichloride and diisobutylaluminium monochloride.

The relative molar quantities of the cocatalyst (A) relative to the titanium, which are employed during the prepolymerization stage may be such that the Al/Ti molar ratio may vary from 1 to 10 and preferably from 2 to 5. It has been noted, in fact, that when the Al/Ti ratio is smaller or greater, the catalyst system loses its stereospecificity and a prepolymer may be obtained with adhesive nature which has, in particular, an excessive content of polymers or copolymers which are soluble in boiling n-heptane, generally a content higher than 10% by weight. Furthermore, when this ratio is too small, the activity of the catalyst system decreases.

In practice, the prepolymer is prepared by polymerization of propylene by itself or of a mixture of propylene with ethylene and/or an alpha-olefin containing from 4 to 12 carbon atoms, such as 1-butene, 1-hexene, 4-methyl-1-pentene, 1-octene and 1-dodecene. However, in order to obtain a prepolymer which is relatively nonadhesive and easily employable in the subsequent gas phase copolymerization stage, the alpha-olefin mixture to be prepolymerized advantageously contains at least 80 mol % and preferably at least 90 mol% of propylene.

The prepolymerization stage may be carried out in one or more consecutive stages and may be stopped when the prepolymer contains from 0.1 to 500 g, preferably more than 10 g and less than 400 g, and more particularly from 100 g to 300 g, of prepolymer per millimole of titanium. During this stage the prepolymer may be prepared according to various methods. For example, it may be prepared in suspension in liquid propylene, at a temperature ranging from 0°C to 80°C, preferably from 10°C to 30°C. It may also be prepared in suspension in a liquid saturated hydrocarbon such as n-hexane or n-heptane, at a temperature ranging from 20°C to 80°C, preferably from 30°C to 65°C. Furthermore, the prepolymer may be prepared in gaseous phase, e.g. in a reactor containing a mechanically agitated and/or fluidized bed, at a temperature ranging from 10°C to 60°C, preferably from 25°C to 40°C, and at a total pressure ranging from 0.1 to 5 MPa. Whatever the method of preparation of the prepolymer, it may be desirable, in order to control the quantity and the quality of prepolymer, to carry out the prepolymerization in such conditions as to make the rate of prepolymerization lower than or equal to 150 g of olefin per hour and per millimole of titanium. It may be controlled using the prepolymerization temperature or the relative quantities of the catalyst and of the cocatalyst (A).

The main effect of the prepolymerization stage carried out according to the present invention is to conform scrupulously to the spherical form of the catalyst without modifying its particle size distribution and to prepare a prepolymer exhibiting advantageous and improved properties with a view to the subsequent stage of gas phase copolymerization. The advantageous and improved properties of the prepolymer have to do especially with an excellent mechanical strength and a remarkable resistance to abrasion and to shattering of the particles subjected to the enormous growth stresses during the subsequent copolymerization stage in gas phase.

Furthermore, the prepolymerization stage results in the astonishing fact that it is possible to prepare a propylene prepolymer in the form of nonadhesive particles in the absence of an external electron-donor compound. This prepolymer has very good dry flow properties and can consequently be easily handled for the subsequent copolymerization stage in gas phase. Moreover, when the prepolymer is prepared in suspension in a liquid, it is found that the content of prepolymer soluble in the liquid is very low. This offers the enormous advantage of making it possible to avoid an operation of extracting and washing the prepolymer and thus making it possible to employ the prepolymer in suspension directly for the second stage of the process.

Another surprising aspect of the present invention consists in that the prepolymer exhibits a high activity in propylene copolymerization and that it is capable of polymerizing propylene and ethylene at similar rates. Furthermore, by virtue of the present invention, before being used in the second stage of the process, the prepolymer can be stored for many weeks and even many months at a temperature which can range, for example, from -30°C to +50°C, without it being possible to observe any appreciable weakening of its catalytic activity. The second stage of the process consists in carrying out a gas phase copolymerization reaction by bringing the prepolymer prepared previously into contact with a mixture comprising propylene, ethylene and/or 1-butene and optionally an alpha-olefin containing from 5 to 12 carbon atoms and which may be chosen from 4-methyl-1-pentene, 1-hexene, 1-octene, 1-decene or 1-dodecene. The olefins to be copolymerized which are present in the mixture are in such a proportion that propylene represents from 20 to 80%, preferably from 25 to 70% and more particularly from 30 to 60% by volume of these olefins. The mixture to be copolymerized may additionally contain an inert gas, such as nitrogen, ethane, propane, butane, pentane or isopentane, and a chain limiting agent such as hydrogen.

The copolymerization reaction itself may be carried out in gaseous phase in a reactor containing a mechanically agitated bed. It may be preferably carried out in a reactor containing a fluidized bed in which the particles of copolymer being formed are kept in the fluidized state with the aid of an upward gas stream moving at a velocity of 2 to 10 times, preferably 5 to 8 times the minimum fluidization velocity, that is to say generally of between 15 and 80 cm/s, preferably of between 30 and 60 cm/s. The gas stream leaves the fluidized bed reactor and flows through a cooling system intended to remove the heat produced during the copolymerization reaction, before being recycled to the fluidized bed reactor by means of a compressor. The mean pressure in the reactor may be close to atmospheric pressure, but is preferably higher in order to increase the copolymerization rate. It may be between 0.1 and 5 MPa, preferably between 0.2 and 3 MPa. The temperature of copolymerization is lower than the softening temperature of the copolymer manufactured and is generally from 0°C to 60°C and preferably from 10 to 50°C. The conditions of gas phase copolymerization are advantageously such as to make the copolymerization rate not too high to prevent the phenomena of sticking in the copolymerization reactor, phenomena which can give rise to the formation of copolymer agglomerates. This rate may be controlled using the temperature of copolymerization or using the quantity of prepolymer employed.

In practice, the gas phase copolymerization reaction is carried out by introducing the prepolymer into the copolymerization reactor, the prepolymer being in the form of a dry powder or of a suspension in an inert liquid hydrocarbon or in liquid propylene. The introduction of the prepolymer may be carried out continuously or intermittently.

The prepolymer may be advantageously employed during the copolymerization in the absence of any external electron-donor compound. It may be activated with the aid of a cocatalyst (B) which is identical with or different from the cocatalyst (A). This cocatalyst (B) is an organoaluminium compound and may be a trialkylaluminium, an alkylaluminium halide, or a mixture of both. It may be chosen, in particular, from triethylaluminium, tri-n-propylaluminium or triisobutylaluminium. It may be introduced into the copolymerization reactor by any of the known methods, in particular in the pure state or diluted in one or more liquid or gaseous alpha-olefines, or in a saturated aliphatic hydrocarbon. The cocatalyst (B) may be introduced into the copolymerization reactor in the liquid state, or preconverted into the gaseous state. The activation of the prepolymer using the cocatalyst (B) can be carried out before the introduction of the prepolymer in the copolymerization reactor and, in particular, in the conduit for introducing the prepolymer into the reactor.

The quantity of cocatalyst (B) introduced into the reactor is such that the molar ratio of the quantity of the cocatalyst (B) to the quantity of titanium in the reactor is between 0.5 and 100, preferably between 1 and 20.

By virtue of the process of the present invention, copolymers are manufactured which contain, by weight, on the one hand from 20% to 80%, preferably from 25% to 60% of propylene and, on the other hand, from 80% to 20% of ethylene and/or of 1-butene and optionally of one or more alpha-olefins containing from 5 to 12 carbon atoms, preferably from 75% to 40% of ethylene and optionally of one or more alpha-olefins containing from 4 to 12 carbon atoms. These copolymers are manufactured with an extremely high catalyst efficiency, since they have very low residual titanium contents, generally lower than 10 ppm. They have a low crystallinity, measured by x-ray diffraction, and in particular a crystallinity of polyethylene type which is lower than 10% and a crystallinity of polypropylene type which is lower than 1%. These copolymers have a viscometric molecular weight ranging from 100,000 to 1,500,000, and a molecular weight distribution, measured using the ratio of the weight-average molecular weight Mw, to the number-average molecular weight Mn, of between 2 and 15 and more particularly between 4 and 8.

Furthermore, it is advantageously found, by virtue of the process of the present invention, that the development of each particle of copolymer during the gas phase copolymerization reaction is perfectly uniform, with the result that copolymer powders are directly obtained, consisting of spherical, nonadhesive particles exhibiting good flow properties and having a mass-mean diameter, Dm, ranging from 250 to 1000 microns. Moreover, the copolymer powder obtained has a high bulk density, in particular of between 0.3 and 0.5 $g/cm^3$.

## Methods of determining the particle mass-mean (Dm) and number-mean (Dn) diameters.

According to the invention, the mass-mean (Dm) and number-mean (Dn) diameters of the particles of support or of catalyst are measured by starting with microscopic observations, using the Optomax image analyser (Micro-Measurements Ltd, Great Britain). The principle of the measurement consists in obtaining, from the experimental study of a population of particles by optical microscopy, a frequency table where the number ($n_i$) of particles belonging to each class (i) of diameters is given, each class (i) being characterized by an intermediate diameter ($d_i$) included within the limits of the said class. According to approved French standard NF X 11-630 of June 1981, Dm and Dn are supplied by the following formulae:

$$\text{mass-mean diameter}: Dm = \frac{n_i(d_i)3d_i}{n_i(d_i)^3}$$

$$\text{number-mean diameter}: Dn = \frac{n_i.d_i}{n_i}$$

The ratio Dm/Dn characterizes the particle size distribution; it is sometimes called "particle size distribution width". The measurement using the Optomax image analyser is performed by means of an inverted microscope which makes it possible to examine the suspensions of particles of support or of catalyst with a magnification of between 16 and 200 times. A television camera picks up the images given by the inverted microscope and transmits them to a computer which analyses the images received line by line and point by point on each line, with a view to determining the particle dimensions or diameter and then classifying them.

The following nonlimiting examples illustrate the invention.

## Example 1

### Preparation of a preactivated support

10.2 litres of a mixture containing 10 moles of dibutylmagnesium in n-hexane, 6.45 litres of n-hexane and, finally 1 litre of diisoamyl ether are introduced successively during a first stage under nitrogen, at ambient temperature (25°C), into a 30-litre stainless steel reactor equipped with a stirring system rotating at the rate of 600 revolutions per minute and with a jacket. In a second stage, where the speed of the stirring system is maintained at 600 revolutions per minute and the reactor temperature at 25°C, 2.4 l of tert-butyl chloride are added at a constant rate over 12 hours to the mixture thus obtained. At the end of this time the reaction mixture is kept at 25°C for 3 hours. The precipitate obtained is washed with 15 litres of n-hexane. The washing of the precipitate is repeated 6 times. The solid product obtained forms the preactivated support (A) based on magnesium dichloride, containing 12 mol% of diisoamyl ether relative to magnesium chloride. When examined microscopically, the preactivated support (A) is in the form of spherical particles which have a mass-mean diameter of 21 microns and an extremely narrow particle size distribution, such that the ratio Dm/Dn of the particles is equal to 1.4.

The specific surface of the preactivated support (A) is approximately 45 $m^2/g$ (BET). The structure of the magnesium dichloride in the preactivated support is completely amorphous.

Example 2

Preparation of a catalyst

A suspension of the preactivated support (A) prepared previously in Example 1, containing 4 moles of magnesium dichloride in 6 litres of n-hexane, is introduced under nitrogen atmosphere into a 30-litre stainless steel reactor equipped with a stirring system rotating at 350 revolutions per minute. To this suspension, which is kept stirred at ambient temperature (25°C) are added 18 litres of n-hexane and, slowly over 30 minutes, 0.365 litres of n-butanol. The suspension of activated support thus obtained is then kept stirred for 1 hour at 25°C. At the end of this time the stirring is stopped, the activated support is allowed to settle, the supernatant liquid phase is removed and the activated support is resuspended with stirring in 6 litres of n-hexane.

In a second stage, 10 litres of n-hexane and, slowly over 30 minutes, 0.46 litres of ethyl benzoate are added to the latter suspension of activated support, kept stirred at 25°C. The suspension of support treated in this manner is kept stirred for 1 hour at 25°C. At the end of this time the stirring is stopped, the treated support is allowed to settle, the supernatant liquid phase is removed and the treated support is subjected to 3 successive washings, each time using 20 litres of n-hexane at 25°C, each washing consisting in keeping the suspension stirred for 15 minutes, then allowing the treated support to settle for 20 minutes, draining off the supernatant liquid phase and resuspending the treated support. Finally, the treated support is resuspended in 6 litres of n-hexane.

In a third stage, 6 litres of titanium tetrachloride are added to the latter suspension of treated support, kept stirred at 25°C. The suspension thus obtained is heated to 100°C and is kept stirred at this temperature for 2 hours. At the end of this time the support suspension impregnated in this way is cooled with stirring to 50°C, then the stirring is stopped, the impregnated support is allowed to settle, the supernatant liquid phase is removed and the impregnated support is subjected to 3 successive washings, 20 litres of n-hexane at 50°C being used each time, followed by 2 successive washings, 20 litres of n-hexane at 25°C being used each time. The impregnated support (B) is finally resuspended in 6 litres of n-hexane at 25°C. It consists of spherical particles containing 6% of titanium atoms per magnesium atom.

In a fourth stage, 9 litres of titanium tetrachloride are added to the latter suspension of impregnated support (B), kept stirred at 25°C. The suspension thus obtained is heated to 100°C and is kept stirred at this temperature for 2 hours. At the end of this time, the suspension of this catalyst which is thus obtained is cooled with stirring to 50°C, then the stirring is stopped, the catalyst is allowed to settle, the supernatant liquid phase is removed and the catalyst is subjected to 3 successive washings, 20 litres of n-hexane at 50°C being used each time, followed by 4 successive washings, 20 litres of n-hexane at 25°C being used each time.

The catalyst (C) is isolated and stored under nitrogen atmosphere. It contains 6.5% of titanium atoms per magnesium atom and consists of spherical particles which have a mass-mean diameter Dm of 21 microns and a particle size distribution such that the ratio Dm/Dn of the particles is 1.4.

Example 3

Preparation of a catalyst

The operation is carried out exactly as in Example 2, except for the fact that, in the second stage, 0.85 litres of diisobutyl phthalate are employed instead of employing 0.46 litres of ethyl benzoate.

A catalyst (D) containing 6% of titanium atoms per magnesium atom is thus obtained. It consists of spherical particles which are identical in every respect with those of the catalyst (C).

Example 4

Preparation of a propylene prepolymer in suspension in n-hexane

2 litres of n-hexane and a quantity of the catalyst (C) prepared in Example 2, containing 1 millimole of titanium and 5 millimoles of diethylaluminium chloride, are introduced under nitrogen atmosphere into a 5-litre stainless steel reactor equipped with a stirring system rotating at a rate of 750 revolutions per minute. The reactor is then heated to 30°C and 200 g of propylene are introduced into it over 2 hours. At the end of this time the prepolymer suspension obtained is transferred into a rotary evaporator operating under vacuum and, after evaporation of all the n-hexane, a prepolymer is recovered, consisting of a nonadhesive powder which has the following characteristics

- quantity of prepolymer obtained per millimole of titanium: 190 g
- bulk density: 0.5 g/cm$^3$
- fraction soluble in boiling n-hexane of the prepolymer, measured before the evaporation: 7.4% by weight.
- melt index measured at 190°C under a 5 kg load MI$_{5/190}$ after washing the prepolymer with n-hexane: 1.7 g/10 minutes
- mass-mean particle diameter Dm: 100 microns

Preparation of a copolymer of ethylene and of propylene in gaseous phase in a fluidized bed reactor

The operation is carried out in a reactor containing a fluidized bed 10 cm in diameter and 1 m in height, which operates with the aid of a fluidization gas containing 67% of ethylene and 33% of propylene by volume at a pressure of 0.5 MPa and moving with an upward velocity of 35 cm/s. This reactor is kept at a temperature of 40°C and 200 g of an inert and perfectly anhydrous copolymer of ethylene with propylene obtained by a previous copolymerization reaction are introduced into it as a powder charge, followed sequentially by a quantity of the prepolymer prepared previously, containing 0.05 millimoles of titanium, preactivated by being brought into contact with 30 millimoles of triisobutylaluminium. At the end of 6 hours' reaction, 2.04 kg of an agglomerate-free copolymer are recovered in the form of a nonadhesive powder which has the following characteristics:

- titanium content: 1.5 ppm
- weight content of units derived from ethylene: 63%
- bulk density: 0.45 g/cm$^3$
- mass-mean particle diameter: 570 microns

Example 5

Preparation of a propylene prepolymer in suspension in n-hexane

2 litres of n-hexane and a quantity of the catalyst (C) prepared in Example 2, containing 1 millimole of titanium and 5 millimoles of triisobutylaluminium, are introduced under nitrogen atmosphere into a 5-litre stainless steel reactor equipped with a stirring system rotating at 750 revolutions per minute. The reactor is then heated to 50°C and 250 g of propylene are introduced into it over 3 hours. At the end of this time the prepolymer suspension obtained is transferred into a rotary evaporator operating under vacuum and after evaporation of all the n-hexane, a prepolymer is recovered, consisting of a nonadhesive powder which has the following characteristics:

- quantity of prepolymer obtained per millimole of titanium: 240 g
- bulk density: 0.5 g/cm$^3$
- fraction soluble in boiling n-hexane of the prepolymer measured before the evaporation: 7% by weight
- MI5/190: 1.4 g/10 minutes
- Dm: 110 microns

Preparation of a copolymer of ethylene and of propylene in gaseous phase in a fluidized bed reactor

The operation is carried out in a reactor containing a fluidized bed 10 cm in diameter and 1 m in height, which operates with the aid of a fluidization gas containing 57% of ethylene and 43% of propylene by volume at a pressure of 0.5 MPa and moving at an upward velocity of 30 cm/s. This reactor is kept at a temperature of 40°C and 200 g of an inert and perfectly anhydrous copolymer of ethylene with propylene originating from a previous copolymerization reaction, are introduced into it as a powder charge followed sequentially by a quantity of prepolymer prepared previously containing 0.1 millimoles of titanium, which has previously been brought into contact with 40 millimoles of triisobutylaluminium. At the end of 6 hours' reaction, 2.02 kg of an agglomerate-free copolymer are recovered in the form of a nonadhesive powder which has the following characteristics:

- titanium content: 3 ppm
- weight content of units derived from ethylene: 56%
- bulk density: 0.45 g/cm$^3$
- Dm: 510 microns

Example 6

Preparation of a propylene prepolymer in suspension in n-hexane

2 litres of n-hexane, a quantity of the catalyst (C) prepared in Example 2, containing 1 millimole of titanium, and 2 millimoles of triethylaluminium are introduced under nitrogen atmosphere into a 5-litre stainless steel reactor equipped with a stirring system rotating at a rate of 750 revolutions per minute. The reactor is then heated to 30°C and 220 g of propylene are introduced into it over 2 hours. At the end of this time the prepolymer suspension obtained is transferred into a rotary evaporator operating under vacuum and, after evaporation of all the n-hexane, a prepolymer is recovered, consisting of a nonadhesive powder which has the following characteristics:

- quantity of prepolymer obtained per millimole of titanium: 210 g

- bulk density: 0.5 g/cm$^3$
- fraction soluble in boiling n-hexane, of the prepolymer measured before the evaporation: 4.1% by weight
- MI$_{5/190}$: 0.22 g/10 minutes
- Dm: 105 microns

**Preparation of a copolymer of ethylene and of propylene in gaseous phase in a fluidized bed reactor**

The operation is carried out in a reactor containing a fluidized bed 10 cm in diameter and 1 m in height, which operates with the aid of a fluidization gas containing 68% of ethylene and 32% of propylene by volume at a pressure of 0.5 MPa and moving at an upward velocity of 35 cm/s. This reactor is kept at a temperature of 40°C and 200 g of an inert and perfectly anhydrous copolymer of ethylene with propylene originating from a previous copolymerization reaction, are introduced into it as a powder charge, followed sequentially by a quantity of prepolymer prepared previously, containing 0.04 millimoles of titanium, which has previously been brought into contact with 40 millimoles of triisobutylaluminium. Under these conditions, at the end of 6 hours' reaction, 1.3 kg of an agglomerate-free copolymer are recovered in the form of a nonadhesive powder which has the following characteristics:
- titanium content: 2 ppm
- weight content of units derived from ethylene: 65%
- bulk density: 0.45 g/cm$^3$
- Dm: 550 microns

**Example 7**

**Preparation of a propylene prepolymer in suspension in n-hexane**

2 litres of n-hexane, a quantity of the catalyst (C) prepared in Example 2, containing 1 millimole of titanium, and 5 millimoles of tri-n-octylaluminium are introduced under nitrogen atmosphere into 5-litre stainless steel reactor equipped with a stirring system rotating at a rate of 750 revolutions per minute. The reactor is then heated to 30°C and 230 g of propylene are introduced into it over 2 hours. At the end of this time the prepolymer suspension obtained is transferred into a rotary evaporator operating under vacuum and, after evaporation of all the n-hexane used, a dry prepolymer is recovered, consisting of a nonadhesive powder which has the following characteristics:
- quantity of prepolymer obtained per millimole of titanium: 220 g
- bulk density: 0.5 g/cm$^3$
- fraction soluble in boiling n-hexane of the prepolymer, measured before the evaporation:

7.8% by weight
- MI$_{5/190}$: 5 g/10 minutes
- Dm: 108 microns

**Preparation of a copolymer of ethylene and of propylene in gaseous phase in a fluidized bed reactor**

The operation is carried out in a reactor containing a cylindrical fluidized bed 10 cm in diameter and 1 m in height, which operates with the aid of a fluidization gas containing 64% of ethylene and 36% of propylene by volume at a pressure of 0.5 MPa and moving at an upward velocity of 35 cm/s. This reactor is kept at a temperature of 40°C and 200 g of an inert and perfectly anhydrous copolymer of ethylene with propylene originating from a previous copolymerization reaction, are introduced into it as a powder charge, followed sequentially by a quantity of previously prepared prepolymer containing 0.035 millimoles of titanium, which has been previously brought into contact with 40 millimoles of triisobutylaluminium. In these conditions, at the end of 6 hours' reaction 1.3 kg of an agglomerate-free copolymer are recovered in the form of a nonadhesive powder which has the following characteristics:
- titanium content: 1.5 ppm
- weight content of units derived from ethylene: 60%
- bulk density: 0.45 g/cm$^3$
- Dm: 570 microns

**Example 8**

**Preparation of a propylene prepolymer in suspension in n-hexane**

2 litres of n-hexane, a quantity of the catalyst (D) prepared in Example 3, containing 1 millimole of titanium, and 5 millimoles of triisobutylaluminium are introduced under nitrogen atmosphere into a 5-litre stainless steel reactor equipped with a stirring system rotating at 750 revolutions per minute. The reactor is then heated to 50°C and 220 g of propylene are introduced into it over 3 hours. At the end of this time the prepolymer suspension obtained is transferred into a rotary evaporator operating under vacuum and, after evaporation of all the n-hexane a prepolymer is recovered, consisting of a nonadhesive powder which has the following characteristics:
- quantity of prepolymer obtained per millimole of titanium: 200 g
- bulk density: 0.5 g/cm$^3$
- fraction soluble in boiling n-hexane of the prepolymer measured before the evaporation: 6% by weight
- MI$_{5/190}$: 2 g/10 minutes
- Dm: 100 microns

Preparation of a copolymer of ethylene and of propylene in gaseous phase in a fluidized bed reactor

The operation is carried out in a reactor containing a fluidized bed 10 cm in diameter and 1 m in height, which operates with the aid of a fluidization gas containing 65% of ethylene and 35% of propylene by volume at a pressure of 0.5 MPa and moving at an upward velocity of 30 cm/s. This reactor is kept at a temperature of 40°C and 200 g of an inert and perfectly anhydrous copolymer of ethylene and propylene originating from a previous copolymerization reaction, are introduced into it as a powder charge, followed sequentially by a quantity of previously prepared prepolymer containing 0.065 millimoles of titanium, which has previously been brought into contact with 30 millimoles of triisobutylaluminium. At the end of 6 hours' reaction 1.4 kg of an agglomerate-free copolymer are recovered in the form of a nonadhesive powder which has the following characteristics:
- titanium content: 2.5 ppm
- bulk density: 0.45 g/cm$^3$
- weight content of units derived from ethylene: 63%
- Dm: 500 microns

Example 9

Preparation of a propylene prepolymer in suspension in n-hexane

The operation is carried out exactly as in Example 4.

Preparation of a copolymer of propylene and of 1-butene in gaseous phase in a fluidized bed reactor.

The operation is carried out in a reactor containing a fluidized bed 10 cm in diameter and 1 m in height, which operates with the aid of a fluidization gas containing 70% of propylene and 30% of 1-butene by volume at a pressure of 0.6 MPa and moving with an upward velocity of 30 cm/s. This reactor is kept at a temperature of 50°C and 200 g of an inert and perfectly anhydrous copolymer of propylene with 1-butene originating from a previous copolymerization reaction, are introduced into it as a powder charge, followed sequentially by a quantity of previously prepared prepolymer containing 0.3 millimoles of titanium, which has previously been brought into contact with 30 millimoles of triethylaluminium. At the end of 10 hours' reaction 2.1 kg of an agglomerate-free copolymer are recovered in the form of a nonadhesive powder which has the following characteristics:
- titanium content: 8 ppm
- weight content of units derived from 1-butene: 25%
- bulk density: 0.45 g/cm$^3$
- Dm: 350 microns

**Claims**

1. Process for the manufacture of copolymer containing, by weight, from 20% to 80% of propylene and from 80% to 20% of ethylene and/or of 1-butene and optionally of one or more alpha-olefins containing from 5 to 12 carbon atoms, the process being characterized in that
    1) a catalyst of Ziegler-Natta type is used, obtained by bringing a magnesium dichloride support into contact with an internal electron-donor compound $D_3$ chosen from aromatic carboxylic acid esters, and then with titanium tetrachloride, the said support being initially preactivated with an organic electron-donor compound D1 different from $D_3$ and free from labile hydrogen, the said support consisting of 80 to 99.5 mol% of magnesium dichloride and from 0.5 to 20 mol% of $D_1$, and being in the form of spherical particles in which the ratio of the large axis to small axis is lower than 1.5, and which have a mass-mean diameter of 5 to 100 microns and a particle size distribution such that the ratio of the mass-mean diameter, Dm, to the number-mean diameter, Dn, is lower than 2, and
    2) that the process comprises in a first stage a prepolymerization performed by bringing propylene optionally mixed with ethylene and/or an alpha-olefin containing from 4 to 12 carbon atoms into contact with a catalyst system comprising the said catalyst and a cocatalyst (A) consisting of a trialkylaluminium and/or of an alkylaluminium halide not complexed with an external electron-donor compound, and in a second stage a gas phase copolymerization reaction carried out by bringing the prepolymer prepared previously into contact with a mixture comprising propylene, ethylene and/or 1-butene and optionally an alpha-olefin containing from 5 to 12 carbon atoms in a proportion such that the propylene represents from 20% to 80% by volume of the olefins to be copolymerized.

2. Process according to Claim 1, characterized in that the organic electron-donor compound $D_1$ is chosen from ethers, sulphones, sulphoxides, phosphines, thioethers, amines and amides.

3. Process according to Claim 1, characterized in that the catalyst is obtained by bringing the preactivated support successively into contact with at least one electron-donor compound containing labile hydrogen $D_2$ and with an internal electron-donor compound $D_3$ chosen from the aromatic carboxylic acid esters, followed by impregnation and activation of the support which are carried out by at least two successive operations of bringing the support into contact with titanium tetrachloride, which are separated by at least one washing with the aid of a hydrocarbon liquid.

4. Process according to Claim 1, characterized in that a prepolymerization is carried out by starting with a mixture of propylene with ethylene and/or an alpha-olefin containing from 4 to 12 carbon atoms containing at least 80 mol% of propylene.

5. Process according to Claim 1, characterized in that the cocatalyst (A) is a trialkylaluminium of general formula $AlR_3$ in which R is an alkyl radical containing from 1 to 8 carbon atoms, or an alkylaluminium halide of general formula $AlX_nR_{3-n}$ in which X is a chlorine or bromine atom, R an alkyl radical containing from 1 to 8 carbon atoms and n an integral or fractional number equal to or higher than 0.5 and lower than 3.

6. Process according to claim 5, characterized in that cocatalyst (A) is selected from triethylaluminium, triisobutylaluminium, tri-n-hexylaluminium, tri-n-octylaluminium, diethylaluminium monochloride, ethylaluminium sesquichloride and diisobutylaluminium monochloride.

7. Process according to Claim 1, characterized in that the cocatalyst (A) is employed in a quantity such that the molar ratio of the cocatalyst (A) to the titanium is between 1 and 10.

8. Process according to Claim 1, characterized in that the prepolymerization is stopped when a prepolymer containing from 0.1 g to 500 g of polymer per millimole of titanium is obtained.

9. Process according to Claim 1, characterized in that the prepolymerization is carried out in suspension in liquid propylene at a temperature ranging from 0°C to 80°C, or in suspension in a liquid saturated hydrocarbon at a temperature ranging from 20°C to 80°C, or else in gaseous phase at a temperature ranging from 10°C to 60°C, and at a pressure ranging from 0.1 to 5 MPa.

10. Process according to Claim 1, characterized in that the gas phase copolymerization reaction is carried out in a reactor containing a mechanically agitated and/or fluidized bed, at a temperature ranging from 0°C to 60°C and at a total pressure ranging from 0.1 to 5 MPa.

11. Process according to Claim 1, characterized in that the gas phase copolymerization reaction is carried out in the absence of any external electron-donor compound.

12. Process according to Claim 1, characterized in that the gas phase copolymerization reaction is carried out in the presence of a cocatalyst (B) which is an organoaluminium compound identical with or different from the cocatalyst (A).

13. Process according to Claim 12, characterized in that cocatalyst (B) is a trialkylaluminium, an alkylaluminium halide or a mixture of both.

14. Process according to Claim 12, characterized in that cocatalyst (B) is selected from triethylaluminium, tri-n-propylaluminium and triisobutylaluminium.

15. Process according to Claim 12, characterized in that cocatalyst (B) is contacted with the prepolymer prior to its use in the gas phase copolymerization reaction.

16. Process according to Claim 12, characterized in that cocatalyst (B) is used in a quantity such that the molar ratio of the quantity of cocatalyst (B) to the quantity of titanium is from 0.5 to 100.

**Patentansprüche**

1. Verfahren zur Herstellung eines Copolymers mit 20 bis 80 Gew.-% Propylen und 80 bis 20 Gew.-% Ethylen und/oder 1-Buten und wahlweise einem oder mehreren alpha-Olefinen mit 5 bis 12 Kohlenstoffatomen, dadurch gekennzeichnet, daß

1) ein Katalysator vom Ziegler-Natta-Typ verwendet wird, der durch Inberührungbringen eines Magnesiumdichloridträgers mit einer internen Elektronen-Donorverbindung $D_3$, die aus aromatischen Carbonsäureestern ausgewählt ist, und anschließend mit Titantetrachlorid, wobei der Träger anfänglich mit einer von $D_3$ sich unterscheidenden und keinen labilen Wasserstoff aufweisenden Elektronen-Donorververbindung $D_1$ voraktiviert wird, aus 80 bis 99,5 Mol-% Magnesiumdichlorid und 0,5 bis 20 Mol-% $D_1$ besteht und in Form kugelförmiger Teilchen, in denen das Verhältnis lange Achse/kurze Achse niedriger als 1,5 ist und die einen Massenmitteldurchmesser von 5 bis 100 μm und eine derartige Teilchengrößeverteilung aufweisen, daß das Verhältnis Massenmitteldurchmesser Dm/Zahlenmitteldurchmesser Dn niedriger als 2 ist, vorliegt, erhalten wird, und

2) das Verfahren in einer ersten Stufe eine Präpolymerisation, die durch Inberührungbringen von wahlweise mit Ethylen und/oder einem alpha-Olefin mit 4 bis 12 Kohlenstoffatomen gemischtem Propylen mit einem den Katalysator und einen Co-Katalysator, der aus einem nicht mit einer externen Elektronen-Donorverbindung komplexierten Trialkylaluminium und/oder Alkylaluminiumhalogenid besteht, umfassenden Katalysatorsystem durchgeführt wird, und in einer zweiten Stufe eine durch Inberührungbringen des zuvor hergestellten Präpolymeren mit einem Propylen, Ethylen und/oder 1-Buten und wahlweise ein alpha-Olefin mit 5 bis 12 Kohlenstoffatomen in einem derartigen Anteil, daß das Propylen 20 bis 80 Vol.-% der zu copolymerisierenden Olefine ausmacht, umfassenden Gemisch durchgeführte Gasphasencopolymerisationsreaktion

umfaßt.

2. Verfahren nach Anspruch 1, dadurch gekennzeichnet, daß die organische Elektronen-Donorverbindung $D_1$ aus Ethern, Sulfonen, Sulfoxiden, Phosphinen, Thioethern, Aminen und Amiden ausgewählt ist.

3. Verfahren nach Anspruch 1, dadurch gekennzeichnet, daß der Katalysator durch aufeinanderfolgendes Inberührungbringen des voraktivierten Trägers mit mindestens einer labilen Wasserstoff enthaltenden Elektronen-Donorverbindung $D_2$ und einer internen Elektronen-Donorverbindung $D_3$, ausgewählt aus den aromatischen Carbonsäureestern, anschließende Imprägnierung und Aktivierung des Trägers, die durch mindestens zwei aufeinanderfolgende Vorgänge eines Inberührungbringens des Trägers mit Titantetrachlorid durchgeführt werden, und die durch mindestens ein Waschen mit Hilfe eines flüssigen Kohlenwasserstoffs getrennt sind, erhalten wird.

4. Verfahren nach Anspruch 1, dadurch gekennzeichnet, daß eine Präpolymerisation durch Beginnen mit einem Gemisch aus Propylen und Ethylen und/oder einem alpha-Olefin mit 4 bis 12 Kohlenstoffatomen mit mindestens 80 Mol-% Propylen durchgeführt wird.

5. Verfahren nach Anspruch 1, dadurch gekennzeichnet, daß der Co-Katalysator (A) aus einem Trialkylaluminium der allgemeinen Formel $AlR_3$, in der R für ein Alkylrest mit 1 bis 8 Kohlenstoffatom(en) steht, oder einem Alkylaluminiumhalogenid der allgemeinen Formel $AlX_nR_{3-n}$, in der X

für ein Chlor- oder Bromatom steht, R einen Alkylrest mit 1 bis 8 Kohlenstoffatom(en) darstellt und n eine ganze oder gebrochene Zahl gleich oder höher als 0,5 und niedriger als 3 bedeutet, besteht.

6. Verfahren nach Anspruch 5, dadurch gekennzeichnet, daß der Co-Katalysator (A) aus Triethylaluminium, Triisobutylaluminium, Tri-n-hexylaluminium, Tri-n-octylaluminium, Diethylaluminiummonochlorid, Ethylaluminiumsesquichlorid und Diisobutylaluminiummonochlorid ausgewählt ist.

7. Verfahren nach Anspruch 1, dadurch gekennzeichnet, daß der Co-Katalysator (A) in einer derartigen Menge verwendet wird, daß das Molverhältnis Co-Katalysator (A)/Titan zwischen 1 und 10 liegt.

8. Verfahren nach Anspruch 1, dadurch gekennzeichnet, daß die Präpolymerisation abgestoppt wird, wenn ein Präpolymer mit 0,1 g bis 500 g Polymer pro Millimol Titan erhalten wird.

9. Verfahren nach Anspruch 1, dadurch gekennzeichnet, daß die Präpolymerisation in Suspension in flüssigem Propylen bei einer Temperatur im Bereich von 0°C bis 80°C oder in Suspension in einem flüssigen gesättigten Kohlenwasserstoff bei einer Temperatur im Bereich von 20°C bis 80°C oder auch in der Gasphase bei einer Temperatur im Bereich von 10°C bis 60°C und bei einem Druck im Bereich von 0,1 bis 5 MPa durchgeführt wird.

10. Verfahren nach Anspruch 1, dadurch gekennzeichnet, daß die Gasphasencopolymerisationsreaktion in einem Reaktor mit einem mechanisch gerührten Bett und/oder Wirbelbett bei einer Temperatur im Bereich von 0°C bis 60°C und einem Gesamtdruck im Bereich von 0,1 bis 5 MPa durchgeführt wird.

11. Verfahren nach Anspruch 1, dadurch gekennzeichnet, daß die Gasphasencopolymerisationsreaktion in Abwesenheit irgendeiner externen Elektronen-Donorverbindung durchgeführt wird.

12. Verfahren nach Anspruch 1, dadurch gekennzeichnet, daß die Gasphasencopolymerisationsreaktion in Anwesenheit eines Co-Katalysators (B), bei dem es sich um eine mit dem Co-Katalysator (A) identische oder sich von diesem unterscheidende Organoaluminiumverbindung handelt, durchgeführt wird.

13. Verfahren nach Anspruch 12, dadurch gekennzeichnet, daß der Co-Katalysator (B) aus einem Trialkylaluminium, Alkylaluminiumhalogenid oder einem Gemisch aus beiden besteht.

14. Verfahren nach Anspruch 12, dadurch gekennzeichnet, daß der Co-Katalysator (B) aus Triethylaluminium, Tri-n-propylaluminium und Triisobutylaluminium ausgewählt ist.

15. Verfahren nach Anspruch 12, dadurch gekennzeichnet, daß der Co-Katalysator (B) mit dem Präpolymer vor seiner Verwendung in der Gasphasencopolymerisationsreaktion in Berührung gebracht wird.

16. Verfahren nach Anspruch 12, dadurch gekennzeichnet, daß der Co-Katalysator (B) in einer derartigen Menge, daß das Molverhältnis Menge des Co-Katalysators (B)/Menge Titan zwischen 0,5 und 100 liegt, verwendet wird.

## Revendications

1. Procédé de fabrication d'un copolymère contenant, en poids, de 20% à 80% de propylène et de 80% à 20% d'éthylène et/ou de 1-butène et, éventuellement, une ou plusieurs alpha-oléfines contenant de 5 à 12 atomes de carbone, le procédé étant caractérisé en ce que

1) on utilise un catalyseur du type Ziegler-Natta obtenu en mettant un support de dichlorure de magnésium en contact avec un composé donneur d'électrons $D_3$ choisi parmi des esters d'acides carboxyliques aromatiques, et, ensuite, avec du tétrachlorure de titane, ledit support étant préactivé initialement à l'aide d'un composé organique donneur d'électrons $D_1$ différent de $D_3$ et exempt d'hydrogène labile, ledit support consistant en 80 à 99,5 mol% de dichlorure de magnésium et de 0,5 à 20 mol% de $D_1$, et étant sous forme de particules sphériques dans lesquelles le rapport entre le grand axe et le petit axe est inférieur à 1,5, et dont le diamètre moyen en masse est de 5 à 100 microns et la répartition des dimensions des particules est telle que le rapport entre le diamètre moyen en masse, $D_m$, et le diamètre moyen en nombre, $D_n$, est inférieur à 2, et

2) en ce que le procédé comprend, dans une première étape, une prépolymérisation effectuée en amenant du propylène, éventuellement mélangé à de l'éthylène et/ou à une alpha-oléfine contenant de 4 à 12 atomes de carbone, en contact avec un système catalyseur comprenant ledit catalyseur et un cocatalyseur (A) consistant en trialkylaluminium et/ou en un halogénure d'alkylaluminium non complexé avec un composé donneur d'électrons externe et, dans une deuxième étape, une réaction de copolymérisation en phase gazeuse réalisée en amenant le prépolymère précédemment préparé en contact avec un mélange contenant du propylène, de l'éthylène et/ou du 1-butène et éventuellement une alpha-oléfine contenant de 5 à 12 atomes de carbone dans une proportion telle que le propylène représente de 20% à 80% en volume des oléfines à copolymériser.

2. Procédé selon la revendication 1, caractérisé en ce que le composé organique donneur d'électrons $D^1$ est choisi parmi les éthers, les sulfones, les sulfoxydes, les phosphines, les thioéthers, les amines et les amides.

3. Procédé selon la revendication 1, caractérisé en ce que le catalyseur est obtenu en amenant successivement le support préactivé en contact avec au moins un composé donneur d'électrons contenant de l'hydrogène labile $D_2$ et avec un composé donneur d'électrons interne $D_3$ choisi parmi des esters d'acides carboxyliques aromatiques, puis par une imprégnation et une activation du support qui sont effectuées au moins par deux opérations successives de mise en contact du support avec du tétrachlorure de titane, et qui sont séparés par au moins un lavage à l'aide d'un hydrocarbure liquide.

4. Procédé selon la revendication 1, caractérisé en ce qu'une prépolymérisation est effectuée en partant d'un mélange de propylène et d'éthylène et/ou d'une alpha-oléfine à 4 à 12 atomes de carbone, contenant au moins 80 mol% de propylène.

5. Procédé selon la revendication 1, caractérisé en ce que le cocatalyseur (A) est un trialkylaluminium de formule générale $AlR_3$ dans laquelle R est un radical alkyle contenant de 1 à 8 atomes de carbone, ou un halogénure d'alkylaluminium de formule générale $AlX_nR_{3-n}$, dans laquelle X est un atome de chlore ou de brome, R est un radical alkyle contenant 1 à 8 atomes de carbone et n est un nombre entier ou fractionnaire égal ou supérieur à 0,5 et inférieur à 3.

6. Procédé selon la revendication 5, caractérisé en ce que le cocatalyseur (A) est choisi parmi le triéthylaluminium, le triisobutylaluminium, le tri-n-hexylaluminium, le tri-n-octylaluminium, le monochlorure de diéthylaluminium, le sesquichlorure d'éthylaluminium et le monochlorure de diisobutylaluminium.

7. Procedé selon la revendication 1, caractérisé en ce que le cocatalyseur (A) est employé en quantité telle que le rapport molaire du cocatalyseur (A) au titane est compris entre 1 et 10.

8. Procedé selon la revendication 1, caractérisé en ce que la prépolymérisation est arrêtée lorsqu'un prépolymère contenant de 0,1 g à 500 g de polymère par millimole de titane est obtenu.

9. Procedé selon la revendication 1, caractérisé en ce que la prépolymérisation est effectuée en suspension dans du propylène liquide à une température comprise entre 0°C et 80°C, ou en suspension dans un hydrocarbure saturé liquide à une température comprise entre 20°C et 80°C, ou encore en phase gazeuse à une température comprise entre 10°C et 60°C et sous une pression comprise entre 0,1 et 5 MPa.

10. Procedé selon la revendication 1, caractérisé en ce que la réaction de copolymérisation en phase gazeuse est effectuée dans un réacteur contenant un lit sous agitation mécanique et/ou fluidisé, à une température comprise entre 0°C et 60°C et sous une pression totale comprise entre 0,1 et 5 MPa.

11. Procedé selon la revendication 1, caractérisé en ce que la réaction de copolymérisation en phase gazeuse est effectuée en l'absence de tout composé donneur d'électrons externe.

12. Procedé selon la revendication 1, caractérisé en ce que la réaction de copolymérisation en phase gazeuse est effectuée en présence d'un cocatalyseur (B) qui est un composé d'organoaluminium identique au cocatalyseur (A) ou différent de celui-ci.

13. Procedé selon la revendication 12, caractérisé en ce que le cocatalyseur (B) est un trialkylaluminium, un halogénure d'alkylaluminium ou un mélange des deux.

14. Procedé selon la revendication 12, caractérisé en ce que le cocatalyseur (B) est choisi parmi le triéthylaluminium, le tri-n-propylaluminium et le triisobutylaluminium.

15. Procedé selon la revendication 12, caractérisé en ce que le cocatalyseur (B) est mis en contact avec le prépolymère avant son utilisation dans la réaction de copolymérisation en phase gazeuse.

16. Procedé selon la revendication 12, caractérisé en ce que le cocatalyseur est utilisé en quantité telle que le rapport molaire entre la quantité de cocatalyseur (B) et la quantité de titane est compris entre 0,5 et 100.